# EUROPEAN PATENT SPECIFICATION

(11) **EP 4 247 296 B1**
(45) Date of publication and mention of the grant of the patent: **18.09.2024**
(21) Application number: 21823365.8
(22) Date of filing: 16.11.2021
(51) Int. Cl.: A61C 17/08, A61C 17/14

(54) **SUCTION DEVICE**
SAUGVORRICHTUNG
DISPOSITIF D'ASPIRATION

(30) Priority: 19.11.2020 IT 202000027789
(43) Date of publication of application: 27.09.2023
(73) Proprietor: Odontoidea S.r.l., 00152 Roma (IT)
(72) Inventor: BENVENUTO, Alessio, 00152 Rome (IT)
(74) Representative: Papa, Elisabetta
(86) International application number: PCT/IB2021/060609
(87) International publication number: WO 2022/106995

(56) References cited:
- EP-A1- 1 709 941
- US-A- 4 865 545
- US-A1- 2016 270 890

## Description

The present invention relates to a suction device configured to suck a fluid or an aerosol going out from a patient's mouth during a dental procedure.

Upon performing dental activities, situations occur in which personnel is exposed to different and numerous risks of professional nature due to the complexity of the dental practice and to the variety of used materials and products. The biological risk deriving from several agents such as bacteria, viruses, fungi, thereto the chemical risk given by toxicity of used materials is added, such as for example the mercury contained in the amalgam used in the past, impose the adoption of operating protocols and measures allowing to reduce the professional risk by guaranteeing to carry out activities in better safety.

In the dental field the need is felt to suck the aerosol or a fluid emitted during a procedure on a patient. The use of high-speed rotary drills, ultrasound instruments, nozzles for the water supply, cutting tools or the like determines the release of aerosol or debris from the working area which determine a biological and chemical risk for the operators.

For this reason, the use of suction devices configured to reduce such risks is known, capable of sucking the fluids present in the working area or the aerosol outgoing from a patient's mouth.

Moreover, the recent emergency caused by pandemic correlated to SARS CoV2, as well as the increasingly frequent onset of diseases which can be airborne transmitted, requires the use of a suction device capable of guaranteeing a high capability of sucking the aerosol cloud produced during a dental procedure.

A suction device for dental use of known type comprises a cannula, configured to be inserted, upon need, in a patient's mouth, to allow the localized suction of fluids such as water, saliva, blood, and so on. The cannula is configured to be connected to a suction source and along its tract it has a shield configured to intercept possible particles, biological material or solid debris thrown outside a patient's mouth and to convey them towards the suction openings delimited along the cannula itself.

US4,776,793 describes such suction device.

Such device has a limited capability of intercepting the aerosol cloud outgoing from a patient's mouth. Consequently, even the capability of guaranteeing an operator safety in proximity of the working area results to be limited and so as not to reduce drastically the risk of professional exposure.

US4865545A discloses a fluid and debris-removing aspirator for use by dentists, comprising a cup-shaped double-wall receptacle providing a container to receive excess drips.

An additional suction device of known type comprises the use of a fixed shield connected through a suction orifice to a suction source. The fixed shield is installed at the chair whereon a patient is positioned, distant from the patient's mouth.

Although such device allows to suck a high amount of aerosol, it has the disadvantage of hindering the mobility or the field of vision of the operator who has to carry out the dental procedure.

The invention is as defined in the appended claims.

The object of the present invention is to allow in a simple, ergonomic, effective and unexpensive way to suck the aerosol produced during a dental procedure to avoid the biological and chemical risks connected thereto, thus by optimizing the working conditions.

An additional object of the present invention is to provide a suction device capable of guaranteeing an effective suction action, so as to allow to intercept wholly the aerosol cloud emitted by a patient's mouth, as from the immediate proximity of the mouth itself.

Another object of the present invention is to provide a suction device which is easy to be implemented and lasting.

Another object of the present invention is to provide a suction device which is of practical use and configured to keep the working area free and accessible.

An additional object of the present invention is to provide a suction device configured to be connected to a suction device already available in a dental environment, for example with reference to a suction device with which a dental chair is equipped, then within an extremely flexible use solution and which does not require any additional machinery with respect to those available for its use.

The invention specifically relates to a suction device configured as a concave body comprising opposite lateral portions which define a bottom edge and a front edge, wherein the bottom edge and the front edge delimit the access to an inner cavity of the suction device, the suction device comprising an external shell and an internal shell mutually coupled in a spaced position so as to delimit between them an interspace, a suction port which extends externally to the suction device starting from the external shell, the suction port being configured to be connected to a suction source and being in fluid communication with the interspace, the internal shell delimiting a plurality of through-openings which are in fluid communication with the suction port through the interspace, wherein the suction device is configured to be positioned at a patient's chin or nose.

According to another aspect of the invention, the openings of the plurality of through-openings can have the same size or different sizes depending upon their positioning along the internal shell.

According to the invention, the suction port delimits at least one opening passing through the external shell.

According to the invention, the internal shell has an inner portion without through-openings, the inner portion facing at least on at least one opening.

According to another aspect of the invention, the suction port can be sealingly connected to the external shell.

According to a further aspect of the invention, the external shell and the internal shell can be mutually sealed at the bottom edge and the front edge.

According to an additional aspect of the invention, the external shell and the internal shell can be made of plastic or resin.

According to another aspect of the invention, the suction device can include at least one spacer element interposed between the external shell and the internal shell.

According to a further aspect of the invention, the bottom edge and the front edge can lie respectively on a bottom surface and a front surface, wherein the bottom surface and the front surface intersect each other.

According to an additional aspect of the invention, at least one of the bottom surface and the front surface can be at least partially flat.

The advantages offered by the suction device according to the invention result evident.

The suction device according to the invention is configured to be positioned at a patient's mouth while carrying out a dental procedure, in the immediate proximity of the mouth, and to guarantee an effective suction action.

The suction device according to the invention allows to capture the aerosol cloud generated during the procedure, by intercepting it immediately when it outgoes from the patient's mouth, thus preventing the spread of biological and chemical contaminants contained therein.

Moreover, in case of removal of the amalgam alloy in the dental filling the suction device according to the invention guarantees an effective suction of the aerosol which is produced, by allowing to perform a procedure in complete safety not only for the operators but even for the patient himself/herself.

The present invention will be now described, by way of example, but not for limitative purposes, according to preferred embodiments thereof, with particular reference to the Figures of the enclosed drawings, wherein:
Figure 1 shows a perspective view of a suction device according to the invention;
Figure 2 shows a side view of a suction device according to the invention;
Figures 3 and 4 show a rear view (Figure 3) and a front view (Figure 4) of the suction device of Figure 1;
Figure 5 shows a rear perspective view of the suction device according to the invention;
Figure 6 shows a detail view of an inner portion of the suction device according to the invention;
Figures 7 and 8 show schematically some use positions of the suction device according to the invention, at a patient's nose (Figure 7) or chin (Figure 8).

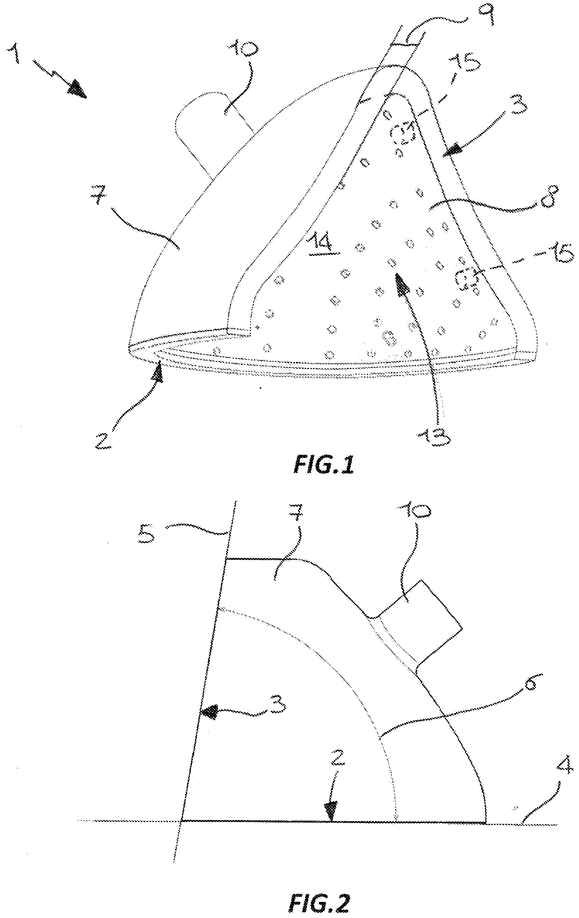

With reference to Figure 1 a preferred embodiment of a suction device according to the invention, designated as a whole with 1, can be observed.

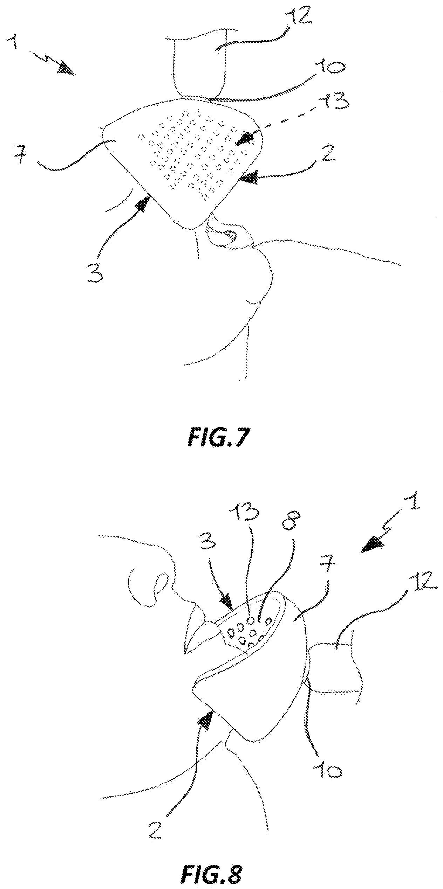

The suction device 1 is configured like a mask or substantially like a mask which can be positioned at a patient's mandible or nose (see Figure 7) or jaw or chin (see Figure 8).

In practice, the same suction device 1 can be positioned in two different portions of a patient's face, by resulting extremely flexible in its use.

The suction device 1 is configured as truncated concave body or truncated cup delimiting an inner cavity.

The suction device 1 has opposite lateral portions which define a bottom edge 2 and a front edge 3 (see for example Figures 1 and 2).

The bottom edge 2 and the front edge 3 lie respectively on a bottom surface 4 and on a front surface 5.

In the enclosed Figure 2, the bottom surface 4 and the front surface 5 are illustrated flat while meaning that one or both of them can be configured curved depending upon the shape one wishes to confer to the suction device 1 and, in particular, to the bottom edge 2 and the front edge 3.

According to an alternative embodiment, at least one of the bottom surface 4 and the front surface 5 is at least partially flat.

The bottom surface 4 and the front surface 5 intersect each other and delimit an angle 6.

The angle 6 has a value equal to 90° or substantially equal to 90°, higher or lower than 90°, but anyway around 90°.

It is meant that alternative embodiments, not illustrated in the enclosed Figures, are possible, wherein for example the angle 6 is comprised between 90° and 150° or between 45° and 90°, depending upon specific use needs, to allow the implementation of a suction device 1 suitable to the anatomic measures of several patients.

According to a preferred embodiment, the bottom edge 2 and the front edge 3 are configured like an arc, vault or the like.

The bottom edge 2 and the front edge 3 delimit the access to the inner cavity of the suction device 1 or a resting counterpart.

The bottom edge 2 and the front edge 3 can be shaped so as to be compatible with the shape of a patient's mandible or jaw portion, respectively, to allow as said the positioning of the suction device 1 respectively at the chin or nose.

The suction device 1 comprises an external shell 7 and an internal shell 8 mutually coupled in a spaced position therebetween.

In practice, the external shell 7 and the internal shell 8 are overlapped to each other, mutually spaced apart.

The external shell 7 and the internal shell 8 delimit an interspace 9 therebetween.

The external shell 7 and the internal shell 8 are mutually sealingly connected at least at the bottom edge 2 and the front edge 3 (see Figure 1).

The suction device 1 comprises a suction port 10 which extends externally to the suction device 1 starting from the external shell 7.

The connection between the suction port 10 and the external shell 7 is sealed, meaning that it has no leakages at the interface existing between them.

The suction port 10 delimits at least an opening 11 which develops passing through the external shell 7. Therefore, the suction port 10 is in fluid communication with the inside of the interspace 9.

The suction port 10 is configured to be operatively connected to a source for the vacuum, not illustrated in the enclosed Figures.

The suction port 10 extends from the external shell 7 along a direction orthogonal to the external shell 7 or tilted direction, without any limitation, depending upon the use needs.

In this regard, it is observed that the suction port 10 is configured to be sealingly connected to a connector 12 of standard type in turn connected to an aspirator according to the modes within the comprehension of a person skilled in the art, which will not be described in details.

By way of example, the suction port 10 can be connected to a suction tube of a suction unit existing in a dental chair, without requiring the use of additional machinery.

It should be noted that the invention does not specifically relate to the connector 12 and the aspirator and, therefore, they will not be further described.

The internal shell 8 has a plurality of through-openings 13.

The plurality of through-openings 13 is implemented along the internal shell 8 except an inner portion 14 facing at least on the opening 11 of the suction port 10. In other words, the inner portion 14 extends on a surface at least equal or larger than that delimited by the at least one opening 11.

The inner portion 14 allows to distribute the suction action through the plurality of through-openings.

The plurality of through-openings 13 comprises through-openings 13 having the same or different sizes depending upon their positioning along the internal shell 8, with the purpose of optimizing the suction action through the inner cavity of the suction device 1.

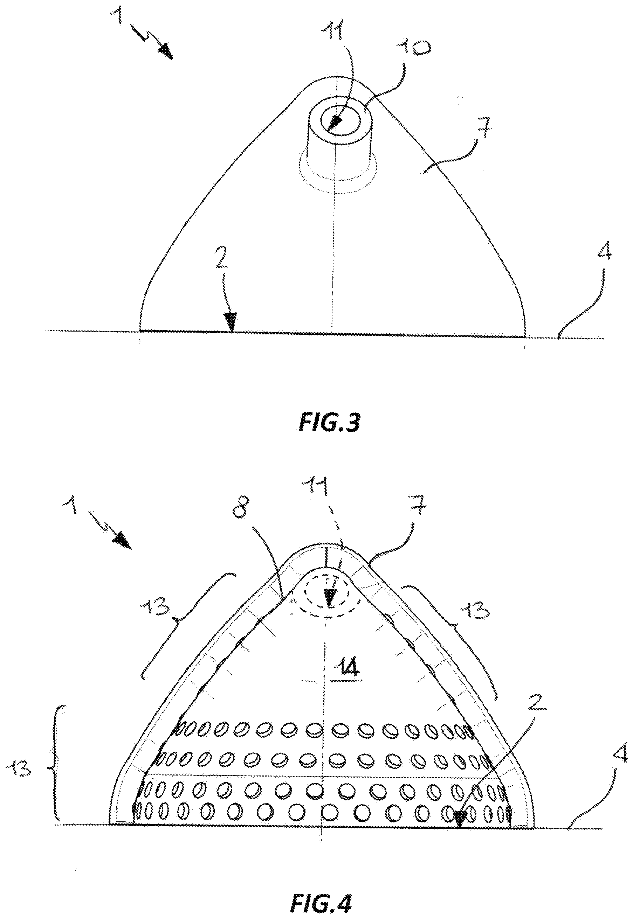

With reference to the embodiments illustrated by way of example and not with limitative purposes in the enclosed Figures 4, 5 and 6, some embodiments of the plurality of through-openings 13 along the internal shell 8 and the respective inner portions 14 are shown.

The plurality of through-openings 13 is in fluid communication with the interspace 9.

In practice, the interspace 9 is in fluid communication with the outside of the suction device 1 on one side through the suction port 10 and on the other side through the plurality of through-openings 13. It means that the plurality of through-openings 13 is in fluid communication with the suction port 10 through the interspace 9.

The arrangement of the plurality of through-openings 13 allows to distribute effectively the suction action through the internal shell 8.

The external shell 7 and the internal shell 8 can be made of plastic or resin or, more generally, a material usually used by dentists to implement dental devices such as braces, bites or the like, thus limiting the production costs of the suction device 1.

The suction device 1 can be implemented in different sizes, for example standardized in small, average or big size, so as to reduce the production costs of the same.

However, it is noted that the suction device 1 can be equally custom-made, based upon a patient's conformation, to better adapt to the anatomy of the latter.

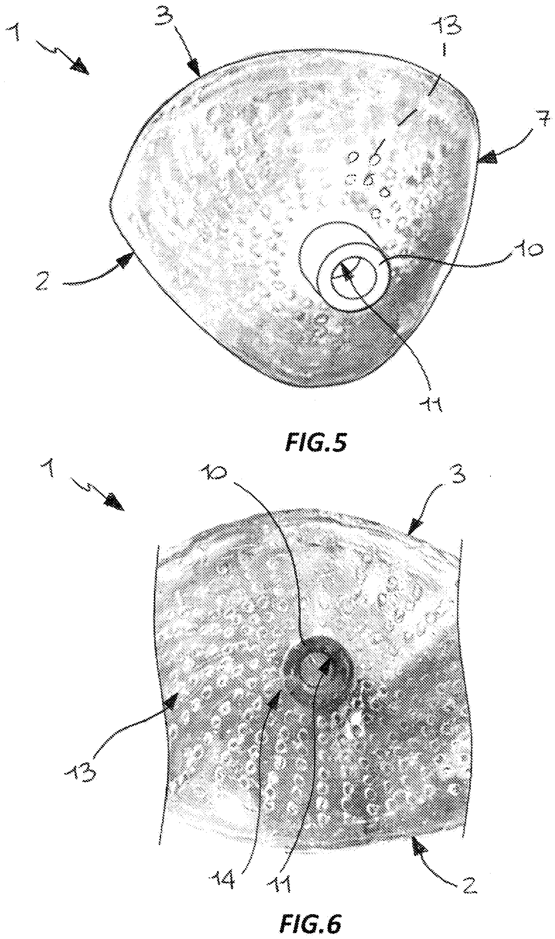

By way of example, the enclosed Figures 1 to 4 show a suction device 1 which has an angular shape at a top portion thereof, whereas the enclosed Figures 5 to 8 show a more rounded suction device 1, while meaning that both embodiments are capable of pursuing the same object.

Optionally, the suction device 1 comprises at least one spacer element 15 interposed between the external shell 7 and the internal shell 8 (see Figure 1).

In practice, the at least one spacer element 15 is comprised inside the interspace 9 and it acts as stiffening element, configured to keep the external shell 7 and the internal shell 8 spaced thereapart and to avoid to squeeze the internal shell 8 against the external shell 7, for example under the suction action. Such squeezing, in fact, reduces the free section of the interspace 9, by compromising the air passage and, thus, by limiting the suction action through the internal shell 8.

In case the use of at least one spacer element 15 is provided, at least the internal shell 8 can has a reduced thickness to the advantage of a greater lightness of the suction device 1.

The at least one spacer element 15 is configured to limit the pressure losses inside the interspace 9. For example, the at least one spacer element 15 is configured cylindrical.

The person skilled in the art could easily understand how a suction device 1 according to the invention is capable of pursuing the intended objects, by guaranteeing an effective suction near the working area, even without limiting the access thereto.

The overall dimension of the suction device 1 is limited and therefore it does not obstacle the motion freedom of an operator during a dental procedure.

Moreover, the suction device 1 is configured to be able to be positioned at the chin and, then, below with respect to a patient's mouth or at the nose and, then, above with respect to the patient's mouth, thus providing a wide use flexibility.

In what precedes preferred embodiments have been described and variants of the present invention have been suggested, but it is to be meant that the persons skilled in the art could bring modifications and changes without in this way leaving the relative protective scope, as defined by the enclosed claims.

## Claims

1. A suction device (1) configured as a concave body comprising opposite lateral portions which define a bottom edge (2) and a front edge (3), wherein said bottom edge (2) and said front edge (3) delimit the access to an inner cavity of said suction device (1), said suction device (1) comprising an external shell (7) and an internal shell (8) mutually coupled in a spaced position so as to delimit between them an interspace (9), a suction port (10) which extends externally to said suction device (1) starting from said external shell (7), said suction port (10) being configured to be connected to a suction source and being in fluid communication with said interspace (9), said internal shell (8) delimiting a plurality of through-openings (13) which are in fluid communication with said suction port (10) through said interspace (9), wherein said suction device (1) is configured to be positioned at one of the chin or nose of a patient,
wherein said suction port (10) delimits at least an opening (11) passing through said external shell (7)
and wherein said internal shell (8) has an inner portion (14) without through-openings (13), said inner portion (14) facing at least on said at least an opening (11).

2. The suction device (1) according to claim 1, wherein said openings of said plurality of through-openings (13) have the same or different sizes depending upon their positioning along said internal shell (8).

3. The suction device (1) according to any one of the preceding claims, wherein said suction port (10) is sealingly connected to said external shell (7).

4. The suction device (1) according to claim 1, wherein said external shell (7) and said internal shell (8) are mutually sealed at said bottom edge (2) and said front edge (3).

5. The suction device (1) according to any one of the preceding claims, wherein said external shell (7) and said internal shell (8) are made of plastic or resin.

6. The suction device (1) according to any one of the preceding claims, comprising at least one spacer element (15) interposed between said external shell (7) and said internal shell (8).

7. The suction device (1) according to any one of the preceding claims, wherein said bottom edge (2) and said front edge (3) lie respectively on a bottom surface (4) and a front surface (5), wherein said bottom surface (4) and said front surface (5) intersect each other.

8. The suction device (1) according to claim 7, wherein at least one of said bottom surface (4) and said front surface (5) is at least partially flat.

## Patentansprüche

1. Saugvorrichtung (1), die als konkaver Körper konfiguriert ist, umfassend gegenüberliegende seitliche Abschnitte, die eine unteren Rand (2) und einen vorderen Rand (3) definieren, wobei der untere Rand (2) und der vordere Rand (3) den Zugang zu einem inneren Hohlraum der Saugvorrichtung (1) begrenzen, wobei die Saugvorrichtung (1) eine Außenschale (7) und eine Innenschale (8) umfasst, die in einer beabstandeten Position miteinander verbunden sind, um zwischen ihnen einen Zwischenraum (9) abzugrenzen, wobei sich ein Sauganschluss (10) ausgehend von der Außenschale (7) außerhalb der Saugvorrichtung (1) erstreckt, wobei der Sauganschluss (10) so konfiguriert ist, dass er an eine Saugquelle angeschlossen werden kann und in Fluidverbindung mit dem Zwischenraum (9) steht, wobei die Innenschale (8) eine Vielzahl von Durchgangsöffnungen (13) begrenzt, die durch den Zwischenraum (9) in Fluidverbindung mit dem Sauganschluss (10) stehen, wobei die Saugvorrichtung (1) so konfiguriert ist, dass sie am Kinn oder an der Nase eines Patienten positioniert werden kann,
wobei der Sauganschluss (10) mindestens eine Öffnung (11) begrenzt, die durch die Außenschale (7) verläuft,
und wobei die Innenschale (8) einen Innenabschnitt (14) ohne Durchgangsöffnungen (13) aufweist, wobei der Innenabschnitt (14) mindestens der mindestens einen Öffnung (11) zugewandt ist.

2. Saugvorrichtung (1) nach Anspruch 1, wobei die Öffnungen der Vielzahl von Durchgangsöffnungen (13) je nach ihrer Positionierung entlang der Innenschale (8) gleiche oder unterschiedliche Größen aufweisen.

3. Saugvorrichtung (1) nach einem der vorstehenden Ansprüche, wobei die Saugöffnung (10) abdichtend mit der Außenhülle (7) verbunden ist.

4. Saugvorrichtung (1) nach Anspruch 1, wobei die Außenschale (7) und die Innenschale (8) am unteren Rand (2) und dem vorderen Rand (3) gegenseitig abgedichtet sind.

5. Saugvorrichtung (1) nach einem der vorstehenden Ansprüche, wobei die Außenschale (7) und die Innenschale (8) aus Kunststoff oder Harz hergestellt sind.

6. Saugvorrichtung (1) nach einem der vorstehenden Ansprüche, die mindestens ein Abstandselement (15) umfasst, das zwischen der Außenschale (7) und der Innenschale (8) angeordnet ist.

7. Saugvorrichtung (1) nach einem der vorstehenden Ansprüche, wobei der untere Rand (2) und der vordere Rand (3) jeweils auf einer unteren Oberfläche (4) und einer vorderen Oberfläche (5) liegen, wobei die untere Oberfläche (4) und die vordere Oberfläche (5) einander überschneiden.

8. Saugvorrichtung (1) nach Anspruch 7, wobei mindestens eine der unteren Oberfläche (4) und der vorderen Oberfläche (5) mindestens teilweise flach ist.

## Revendications

1. Dispositif d'aspiration (1) conçu sous la forme d'un corps concave comprenant des parties latérales opposées qui définissent un bord inférieur (2) et un bord avant (3), dans lequel ledit bord inférieur (2) et ledit bord avant (3) délimitent l'accès à une cavité interne dudit dispositif d'aspiration (1), ledit dispositif d'aspiration (1) comprenant une coque externe (7) et une coque interne (8) mutuellement accouplées dans une position espacée de manière à délimiter entre elles un espace intermédiaire (9), un orifice d'aspiration (10) qui s'étend à l'extérieur dudit dispositif d'aspiration (1) à partir de ladite coque externe (7), ledit orifice d'aspiration (10) étant conçu pour être relié à une source d'aspiration et étant en communication fluidique avec ledit espace intermédiaire (9), ladite coque interne (8) délimitant une pluralité d'ouvertures traversantes (13) qui sont en communication fluidique avec ledit orifice d'aspiration (10) à travers ledit espace intermédiaire (9), dans lequel ledit dispositif d'aspiration (1) est conçu pour être positionné au niveau de l'un parmi le menton ou le nez d'un patient,
dans lequel ledit orifice d'aspiration (10) délimite au moins une ouverture (11) traversant ladite coque externe (7)
et dans lequel ladite coque interne (8) a une partie interne (14) sans ouvertures traversantes (13), ladite partie interne (14) étant orientée vers au moins ladite au moins une ouverture (11).

2. Dispositif d'aspiration (1) selon la revendication 1, dans lequel lesdites ouvertures de ladite pluralité d'ouvertures traversantes (13) ont des tailles identiques ou différentes en fonction de leur positionnement le long de ladite coque interne (8).

3. Dispositif d'aspiration (1) selon l'une quelconque des revendications précédentes, dans lequel ledit orifice d'aspiration (10) est relié de manière étanche à ladite coque externe (7).

4. Dispositif d'aspiration (1) selon la revendication 1, dans lequel ladite coque externe (7) et ladite coque interne (8) sont mutuellement étanches au niveau dudit bord inférieur (2) et dudit bord avant (3).

5. Dispositif d'aspiration (1) selon l'une quelconque des revendications précédentes, dans lequel ladite coque externe (7) et ladite coque interne (8) sont constituées de plastique ou de résine.

6. Dispositif d'aspiration (1) selon l'une quelconque des revendications précédentes, comprenant au moins un élément d'espacement (15) interposé entre ladite coque externe (7) et ladite coque interne (8).

7. Dispositif d'aspiration (1) selon l'une quelconque des revendications précédentes, dans lequel ledit bord inférieur (2) et ledit bord avant (3) se trouvent respectivement sur une surface inférieure (4) et une surface avant (5), dans lequel ladite surface inférieure (4) et ladite surface avant (5) se croisent.

8. Dispositif d'aspiration (1) selon la revendication 7, dans lequel au moins l'une parmi ladite surface inférieure (4) et ladite surface avant (5) est au moins partiellement plate.
